Europäisches Patentamt

European Patent Office

Office européen des brevets

(19)

(11) Veröffentlichungsnummer : **0 170 832 B1**

(12) **EUROPÄISCHE PATENTSCHRIFT**

(45) Veröffentlichungstag der Patentschrift :
30.08.89

(21) Anmeldenummer : 85107369.2

(22) Anmeldetag : 14.06.85

(51) Int. Cl.⁴ : **G 06 K 19/08**, B 42 D 15/02, G 11 B 5/80

---

(54) Prägefolie, insbesondere Heissprägefolie mit einer beschreibbaren Oberfläche.

---

(30) Priorität : 20.06.84 DE 3422908

(43) Veröffentlichungstag der Anmeldung :
12.02.86 Patentblatt 86/07

(45) Bekanntmachung des Hinweises auf die Patenterteilung : 30.08.89 Patentblatt 89/35

(84) Benannte Vertragsstaaten :
AT BE CH FR GB IT LI NL SE

(56) Entgegenhaltungen :
FR–A– 2 344 919
US–A– 3 644 716
US–A– 4 092 526
US–A– 4 106 062
US–A– 4 132 350

(73) Patentinhaber : LEONHARD KURZ GMBH & CO.
Schwabacher Strasse 482
D-8510 Fürth/Bayern (DE)

(72) Erfinder : Der Erfinder hat auf seine Nennung verzichtet

(74) Vertreter : LOUIS, PÖHLAU, LOHRENTZ & SEGETH
Kesslerplatz 1 Postfach 3055
D-8500 Nürnberg (DE)

### Beschreibung

Die Erfindung betrifft eine Prägefolie, insbesondere Heißprägefolie, bestehend aus einer Trägerfolie und einer von dieser ablösbaren Übertragungslage, welche wenigstens eine nach dem Prägen und Ablösen der Trägerfolie die Oberfläche bildende, beschreibbare Lackschicht (Signierschicht) aufweist, welche Übertragungslage ggf. auf ihrer der Trägerfolie abgekehrten Seite eine zu ihrer Festlegung an einem Substrat dienende Klebeschicht umfaßt.

Üblicherweise ist auf Kredit-, Scheckkarten und ähnlichen Ausweisen ein Unterschriftenfeld angebracht. Dieses Unterschriftenfeld ist normalerweise weiß oder getönt und unter Umständen mit einem Aufdurck mit spezieller Gestaltung versehen. Wichtig ist dabei, daß sich das Unterschriftenfeld gut beschreiben läßt. Um sicherzustellen, daß nicht mit der Unterschrift auf einer derartigen Karte Manipulationen zwecks Verfälschung der Karte betrieben werden, sind dem Unterschriftenfeld bzw. dem Aufdruck häufig Substanzen zugemischt, die auf Manipulationsversuche an der Unterschrift durch Farbveränderungen reagieren, z. B. Ausbleichen, Dunkelfärbung oder Farbumschlag, Radierversuche will man dadurch sichtbar machen, daß ein andersfarbiger Untergrund beim Radieren zum Vorschein kommt. Trotz dieser Maßnahmen, die teilweise recht aufwendige Zusammensetzungen für das Unterschriftsfeld und komplizierte Anbringunsverfahren erfordern, läßt jedoch die Fälschungssicherheit immer noch etwas zu wünschen übrig.

Aus der GB-A-2 044 175 ist eine Identifikationskarte bekannt, die aus einer Zwischenschicht und zwei Deckschichten besteht. Die obere Deckschicht trägt ein beschreibbares Signierfeld, welches von einem auflaminierten Streifen gebildet ist. Im Bereich unterhalb dieses Signierfeldes ist die untere Deckschicht mit einem Magnetstreifen versehen. Die Zwischenlage der bekannten Identifikationskarte weist eine räumliche Musterung auf, die aber so ausgebildet ist, daß sie auf die Oberfläche der oberen Deckschicht übergreift, wobei die räumliche Musterung auch in den Bereich der Signierschicht reicht. Die räumliche Musterung wird dabei mittels eines Laserstrahles erzeugt, und zwar erst nach Fertigstellung der Karte, so daß sie jeweils für die Karten einzeln aufgebracht werden muß. Diese Art der Erzeugung der räumlichen Musterung führt im übrigen dazu, daß man Oberflächen-Unebenheiten erhält, weshalb ein Beschreiben der Signierschicht im Bereich der räumlichen Musterung nach deren Anbringung nicht mehr möglich ist. Außerdem ist für die Herstellung der räumlichen Musterung eine vergleichsweise komplizierte Vorrichtung erforderlich, die im übrigen erst eingesetzt werden kann, wenn die Unterzeichnung auf dem Unterschriftsfeld erfolgt ist.

In der gem. Artikel 54 (3) zu berücksichtigenden EP-A-0 145 473 ist eine Identifikationskarte beschrieben, die an ihrer Oberseite eine mattierte Schicht aufweist, welche zur Erzeugung eines Bildes bzw. zur Wiedergabe einer Unterschrift graviert ist, wobei die Gravurschnitte eine opake Deckschicht in unterschiedlicher Breite durchdringen, so daß eine dunklere, darunter liegende Schicht der Karte sichtbar wird. Auf diese Weise wird einerseits z. B. ein Bild und andererseits die Wiedergabe einer Unterschrift erzeugt. Da die opake Deckschicht Gravurschnitte aufweist, ist sie uneben und kann nicht als Signierfeld verwendet werden. Im übrigen stellt aber die Identifikationskarte auch keine Prägefolie dar und ist auch nicht mittels einer Prägefolie hergestellt.

Aus der US-A-4 376 006 ist eine Prägefolie bekannt, die auf einer Trägerfolie eine Übertragungslage mit einer Magnetschicht aufweist, wobei diese Übertragungslage ausgehend von der Trägerfolie aus einer magnetischen Schicht, einer nicht magnetischen Metallschicht sowie einer Farbschicht besteht. Zusätzlich können weitere Schichten, z. B. Haftvermittlerschichten, Klebeschichten etc. vorgesehen sein. Bei dieser bekannten Prägefolie hat die nicht magnetische Metallschicht in Verbindung mit der Lackschicht die Aufgabe, ein helles, ansprechendes Aussehen des Magnetstreifens zu erzielen. An die Möglichkeit der Beschreibbarkeit oder einer zusätzlichen Fälschungssicherung ist nicht gedacht.

Der Erfindung liegt die Aufgabe zugrunde, eine Prägefolie, insbesondere Heißprägefolie, vorzuschlagen, die einerseits gut beschrieben werden kann, andererseits aber weitgehend fälschungssicher ist, wobei zudem für die Aufbringung der Folie keine besonderen Vorrichtungen oder Maßnahmen erforderlich sind.

Zur Lösung dieser Aufgabe wird nach der Erfindung bei einer Folie der eingangs erwähnten Art vorgeschlagen, daß die Übertragungslage auf der der Trägerfolie abgekehrten Seite der Signierschicht mindestens eine eine beugungsoptisch, insbesondere holographisch wirksame Musterung aufnehmende Beugungsschicht umfaßt, und daß die Signierschicht den beschreibbaren Lack nur in Bereichen aufweist, wobei entweder die beschreibbaren Bereiche der Signierschicht und beugungsoptisch wirksamen Musterung in gegeneinander abgegrenzten Flächenbereichen der Prägefolie vorgesehen sind oder die beschreibbaren Bereiche der Signierschicht im Raster so vorgesehen sind, daß sie die beugungsoptische Musterung der Beugungsschicht rasterartig überdecken und die Musterung nur den Raster-Zwischenräumen entsprechend erkennbar ist.

Die Folie gemäß der Erfindung umfaßt somit nicht nur eine beschreibbare Oberfläche sondern außerdem noch eine beugungsoptisch wirksame, insbesondere holographische Musterung. Die Verwendung einer derartigen, unter Umständen recht komplizierten und ohne Störung nicht veränderbaren Musterung ergibt ein hohes Maß an Fläschungssicherheit, und zwar über ein visuell erkennbares oder auch nur unter bestimmen Beleuchtungsverhältnissen sichtbares Echtheitskennzeichen, insbesondere ein Hologramm, wobei die Imitation einer derartigen beugungsoptischen Musterung sehr schwierig ist. Ein weiterer Vorteil ist darin zu sehen, daß beugungsoptisch wirksame Musterungen normalerweise nicht nur visuell sondern auch maschinell gut erkennbar sind, so daß also die Feststellung der Echtheit der Karte oder dgl. mittels entsprechender Leser leicht möglich ist. Durch die Kombination eines beschreibbaren Feldes mit einer beugungsoptisch wirksamen, insbesondere holographisch wirksamen Musterung wird aber nicht nur eine Verbesserung der Fälschungssicherheit erzielt. Vor allem bei Verwendung von Hologrammen läßt sich nämlich zusätzlich ein besonders elegantes Aussehen erzielen und es wird weiter durch die Abhängigkeit des Erscheinungsbildes der Musterung bzw. des Hologramms vom Betrachtungswinkel das Interesse des Betrachters in besonderem Maße geweckt, so daß der unbestrittene Werbeeffekt von Kreditkarten, Tickets etc. durch Verwendung einer Folie gemäß der Erfindung anstelle konventioneller Signierfolien erheblich gesteigert werden kann. Wenn gemäß einer ersten Ausführungsform des Erfindungsgedankens die beschreibbaren Bereiche der Signierschicht und die beugungsoptisch wirksame Musterung in gegeneinander abgegrenzten Flächenbereichen der Prägefolie vorgesehen sind, enthält diese neben einem Signierfeld eine oder mehrere, von beugungsoptisch wirksamen Musterungen gebildete Beugungsbilder. Wenn gem. der anderen Ausführungsform des Erfindungsgedankens die beschreibbaren Bereiche der Signierschicht im Raster so vorgesehen sind, daß sie die beugungsoptische Musterung der Beugungsschicht rasterartig überdecken und die Musterung nur den Raster-Zwischenräumen entsprechend erkennbar ist, wird zwischen der Beugungsschicht und der Trägerfolie lediglich ein Rasterdruck des beschreibbaren, die Signierschicht bildenden Lackes vorgesehen, so daß in den Zwischenräumen noch die Beugungsschicht durchscheint. Auf diese Weise wird einerseits eine Beschreibbarkeit im Gesamtbereich der Folie erreicht. Andererseits kann aber auch das Hologramm oder die sonstige, beugungsoptisch wirksame Musterung noch erkannt werden, und zwar deswegen, weil beispielsweise bei Hologrammen und anderen, speziellen beugungsoptischen Musterungen es möglich ist, daß diese auch dann noch alle Informationen liefern, wenn ein Teil der Musterung abgedeckt ist. Dies beruht darauf, daß jedes Flächenelement der beugungsoptischen Musterung die Gesamtheit der in der Musterung gespeicherten Informationen zu liefern vermag, allerdings dann mit verringertem Signal-Rauschabstand. Die rasterartige Überdeckung der Beugungsschicht durch die Signierschicht kann in unterschiedlicher Weise erfolgen, beispielsweise durch ein Punktraster, ein Linienraster oder aber auch in Form eines ganz speziell gestalteten Kennzeichens. Auf jeden Fall erhält man auf diese Weise auf verhältnismäßig geringem Platz Raum sowohl für ein Unterschriftenfeld als auch für die Anbringung zusätzlicher Kennzeichnungen.

Die Aufbringung der Signierschicht nur in begrenzten Flächenbereichen würde dazu führen, daß sich eine unerwünschte Oberflächen-Welligkeit der Folie nach dem Abprägen ergibt. Um dies zu vermeiden, wird nach der Erfindung vorgeschlagen, daß die zwischen den beschreibbaren Bereichen befindlichen Bereiche der Signierschicht zur Bildung einer ebenen Oberfläche aus einem Klarlack entsprechender Dicke bestehen. Dieser Klarlack stört die Lesbarkeit der beugungsoptisch wirksamen Musterung nicht. Besonders günstig ist es dabei, wenn der Klarlack ein Ablöselack ist, da in einem solchen Fall darauf verzichtet werden kann, zwischen der Trägerfolie und der Signierschicht eine besondere Trennschicht vorzusehen. Außerdem hat ein solches Vorgehen den Vorteil, daß sich die Signierschicht unter Umständen schwerer von der Trägerfolie löst als der Klarlack, was dazu führt, daß die Signierschicht bei Ablösen der Trägerfolie reißt und sich so eine Aufrauhung der Oberfläche der Signierschicht in einem zum Beschreiben hinreichenden Maß ergibt.

Es liegt im Rahmen der Erfindung, daß die Beugungsschicht von einer Lackschicht gebildet ist, in die die beugungsoptisch wirksame Musterung eingeprägt ist. Bei einer derartigen Ausbildung läßt sich eine relativ geringe Dicke der Folie erreichen. Zur Herstellung derartiger Folien ist auch — neben dem Prägen — kein zusätzlicher Arbeitsgang erforderlich. Bei Einprägung der beugungsoptisch wirksamen Musterung auf der von der Signierschicht weg weisenden Seite der Beugungsschicht ergibt sich zusätzlich der Vorteil, daß die beugungsoptisch wirksame Musterung nach dem Abprägen der Folie immer noch geschützt ist und die Folie eine einwandfreie glatte Oberfläche aufweist.

Vor allem dann, wenn die beugungsoptisch wirksame Musterung mit bloßem Auge sichtbar sein soll, ist es günstig, wenn die Beugungsschicht auf der von der Trägerfolie weg weisenden Seite eine Metallschicht mit der beugungsoptisch wirksamen Musterung aufweist, wobei die Metallschicht zweckmäßig eine aufgedampfte Schicht aus Aluminium oder einer Aluminium-Legierung ist. Die Anbringung einer solchen Metallschicht führt im allgemeinen zu einer besseren Sichtbarkeit der optisch wirksamen Musterung. Andererseits können mit einer solchen Metallschicht weitere Effekte bezüglich des Aussehens des zu sichernden Dokumentes erreicht werden, was sowohl für den Werbeeffekt als auch für bestimmte Anwendungsgebiete wesentlich ist. Dabei kann die Metallisierung erst nach dem Einprägen der beugungsoptisch wirksamen Musterung in eine Lackschicht aufgebracht werden. Es wäre aber auch denkbar, die beugungsoptisch wirksame Musterung nicht direkt in die jeweilige Lackschicht einzuprägen sondern erst die Metallschicht anzubringen und die Musterung dann in diese Metallschicht zu prägen.

Häufig besteht, beispielsweise bei Kredit- und Scheckkarten, der Wunsch, diese mit zusätzlichen Informationen, z. B. über den jeweiligen Kontostand zu versehen, wobei diese Informationen veränderlich sein sollen. Um dies zu erreichen, wird erfindungsgemäß eine Weiterentwicklung der Prägefolie dahingehend vorgeschlagen, daß die Übertragungslage auf der der Trägerfolie abgekehrten Seite der Beugungsschicht eine Magnetschicht aus einer Dispersion magnetisierbarer Teilchen in einem Bindemittel umfaßt. Man erhält dann eine Prägefolie, insbesondere Heißprägefolie, die einerseits in der Magnetschicht die Speicherung veränderlicher Daten, beispielsweise des Kontostandes etc., gestattet, andererseits ohne Schwierigkeiten die Anbringung solcher Sicherheitsmerkmale an einem Dokument ermöglicht, die nicht veränderlich sein sollen, nämlich über die beugungsoptisch wirksame Musterung und schließlich auch noch die Anbringung der Unterschrift des Inhabers in weitgehend fälschungssicherer Weise ermöglicht. Will man bei der Prägefolie nach der Erfindung versuchen, die beugungsoptische Musterung der abgeprägten Folie zu verändern oder die auf der Folie enthaltene Unterschrift, wird dies im allgemeinen zu einer Zerstörung der beugungsoptisch wirksamen Musterung führen, eventuell auch eine Beschädigung der Magnetschicht nach sich ziehen. Trotz des Vorhandenseins einer Signierschicht und einer beugungsoptisch wirksamen Musterung läßt sich aber die Folie nach der Erfindung derart ausbilden, daß die über der Magnetschicht liegenden Schichten so dünn sind, daß das von der Magnetschicht abgegebene Signal den einschlägigen Normen entspricht. Die zulässige Schichtdicke der Beugungs- bzw. Signierschicht hängt wesentlich von den magnetischen Eigenschaften der Magnetschicht ab, insbesondere von der Art, dem Dispergierzustand, dem Orientierungsverhältnis, der Pigmentierungshöhe und der Schichtdicke der Magnetschicht, natürlich auch von dem verwendeten Magnetpigment. Da die Beugungs- und Signierschicht beide verhältnismäßig dünn sein können, ist es möglich, die üblichen, vergleichsweise dünnen Magnetschichten mit einer Schichtdicke von weniger als 10 μm zu verwenden, was vor allem günstige Einflüsse auf die Verarbeitbarkeit der Folie sowie deren Eigenschaften, beispielsweise hinsichtlich des Zusammenhalts der Schichten, hat. Die Verwendung einer Prägefolie gemäß der Erfindung als Magnetfolie hat außerdem den Vorteil, daß sich nach dem Prägen eine sehr glatte Oberfläche ergibt, da die Glätte der Oberfläche der Prägung von der Glätte der Oberfläche der Trägerfolie abhängt. Wird beispielsweise als Trägerfolie ein Polyesterfilm verwendet, so kann man davon ausgehen, daß dessen Oberflächenrauhigkeit kleiner als 1 μm ist, so daß die Qualität der geprägten Oberfläche bei einwandfreiem Prägewerkzeug weit über der geforderten Norm eines Mittelrauhwertes von höchstens 2,5/μm liegt. Die Einbindung der Beugungsschicht, der Signierschicht und der Magnetschicht in eine einzige Prägefolie hat gegenüber dem durchaus denkbaren, separaten Anbringen der verschiedenen Schichten vor allem auch den großen Vorteil, daß das Ablösen einzelner Schichten und damit ein Verfälschen bei der Folie nach der Erfindung wesentlich erschwert wird. Außerdem ergeben sich selbstverständlich herstellungstechnische und verarbeitungstechnische Vorteile, da infolge der Vereinigung des Echtheitskennzeichens mit dem Signierfeld und ggf. einem Träger für veränderliche Daten in einer einzigen Folie nur noch ein Arbeitsgang zur Aufbringung der Prägefolie erforderlich ist, während früher verschiedene Arbeitsgänge notwendig waren. Bei Vorhandensein einer Magnetfolie neben der beugungsoptisch wirksamen Musterung läßt sich im übrigen eine besonders hohe Fälschungssicherheit dann erreichen, wenn man die in der Magnetschicht gespeicherten Daten in gewisser Weise an die beugungsoptisch wirksame Musterung anpaßt, d. h. eine bestimmte Zuordnung vornimmt. In einem derartigen Falle wird dann eine Fälschung, z. B. der Daten in der Magnetschicht, sehr rasch erkennbar. Weiterhin ist es möglich, in der Magnetschicht und der Beugungsschicht grundsätzlich die gleichen Daten zu speichern, in welchem Falle dann ein einfacher Vergleich der gespeicherten Daten zeigen kann, ob Fälschungen vorgenommen wurden oder nicht.

Schließlich liegt es im Rahmen der Erfindung, daß die Signierschicht und/oder die Beugungsschicht und/oder die Magnetschicht und/oder der Klarlack gefärbt sind, um auf diese Weise besondere optische oder dekorative Effekte zu erzielen.

Die Aufbringung der Lackschichten kann bei der Herstellung der Prägefolien gemäß der Erfindung mittels der an sich für die Prägefolien-Fabrikation bekannten Verfahren in Abhängigkeit von der Viskosität des verarbeiteten Lackes und der jeweiligen Schichtdicke erfolgen, z. B. mittels Rasterwalzen (Tiefdruck), Rollrakel, Reverse Roller, Giessen etc.

Zur Metallisierung werden ebenfalls die bekannten Verfahren eingesetzt, die ohne Pigment arbeiten, z. B. Vakuum-Aufdampfen oder Kathoden-Strahl-Zerstäuben.

Nachfolgend werden zwei bevorzugte Ausführungsbeispiele von Heißprägefolien nach der Erfindung anhand der Zeichnung näher erläutert. In der Zeichnung stellen dar :

Fig. 1 einen Schnitt durch eine Prägefolie mit einer Signierschicht und einer Beugungsschicht, bei der die beschreibbaren Bereiche völlig von den Bereichen der beugungsoptisch wirksamen Musterung abgegrenzt sind und

Fig. 2 einen Schnitt durch eine Heißprägefolie mit einer Magnetschicht, einer Beugungsschicht und einer Signierschicht, bei der die Signierschicht die Beugungsschicht überdeckt.

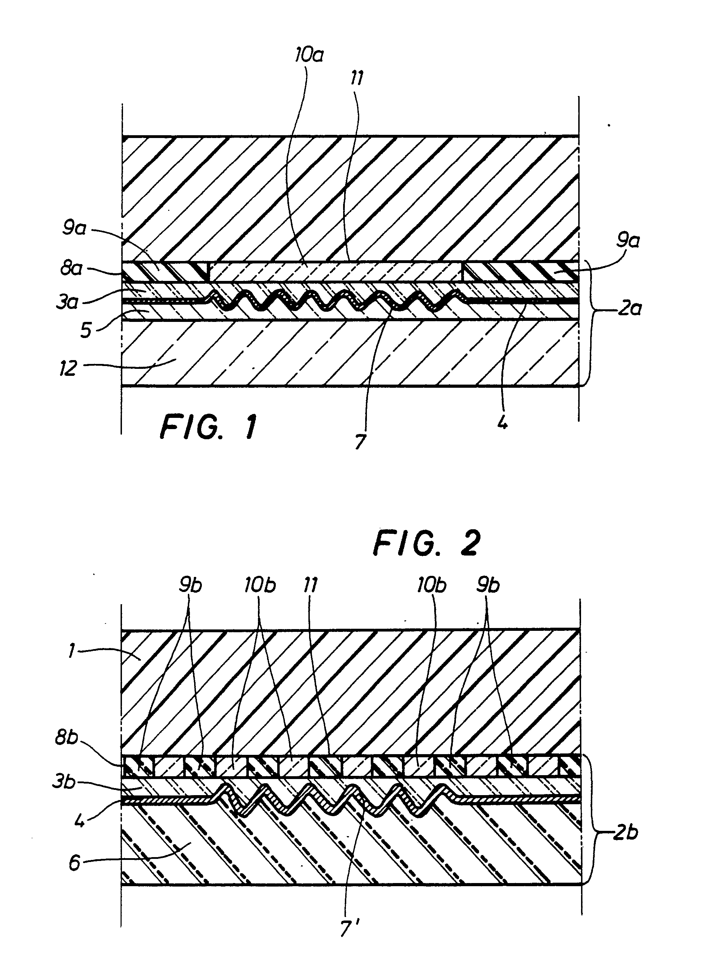

Die Prägefolien gemäß den gezeigten Ausführungsbeispielen umfassen jeweils eine Trägerfolie 1, die z. B. eine Stärke von etwa 19 μm hat und aus Polyethylenglykolterephthalat besteht. Auf diese Trägerfolie 1 ist eine Übertragungslage 2a bzw. 2b aufgedruckt, die von der Trägerfolie 1 abgelöst werden kann. Der Unterschied der Folien gemäß den Fig. 1 und 2 besteht in dem Aufbau der jeweiligen Übertragungslage 2a bzw. 2b.

Beispiel 1 (Fig. 1)

Die Übertragungslage 2a umfaßt, ausgehend von der Trägerfolie 1, eine oberflächliche Lack-Signierschicht 8a, die nach dem Anbringen der Prägefolie und Ablösen der Trägerfolie 1 die freie,

EP 0 170 832 B1

weitgehend ebene Oberfläche 11 bildet. Hierauf folgt eine Lackschicht 3a, die die Beugungsschicht bildet, d. h. zur Aufnahme der beugungsoptisch wirksamen Musterung 7 bestimmt ist. Anschließend an die Beugungsschicht 3a ist eine dünne Metallschicht 4, eine Haftvermittlerschicht 5 sowie die zur Festlegung der Folie auf dem Substrat dienende, klebende Lackschicht 12 vorgesehen. Die Dicke der jeweiligen Schichten ist nicht maßstabsgerecht dargestellt. Der als Trägerfolie dienende Polyesterfilm 1 hat beispielsweise eine Stärke von 10 bis 25, vorzugsweise etwa 19 $\mu$m. Die Schicht 8a wird in einer Dicke von 1,5 bis 3 $\mu$m aufgetragen, die Beugungsschicht 3a ist beispielsweise etwa 0,8 bis 2 $\mu$m stark. Die Metallschicht 4 ist aufgedampft und hat eine Stärke von 0,01 bis 0,04 $\mu$m. Die Haftvermittlerschicht 5 besitzt beispielsweise eine Stärke von 0,2 bis 0,7 $\mu$m. Die Klebeschicht 12 schließlich kann eine Stärke von 1,5 bis 4 $\mu$m besitzen.

Die beugungsoptisch wirksame Musterung 7 ist in Fig. 1 der Einfachheit halber wellenförmig gezeigt. Es handelt sich hierbei z. B. um eine holographisch wirksame Beugungsstruktur, deren Aufbau in Wirklichkeit wesentlich komplizierter ist.

Wie Fig. 1 weiter deutlich erkennen läßt, umfaßt die Signierschicht 8a mehrere deutlich gegeneinander abgegrenzte Bereiche. Diese Bereiche bestehen einerseits aus einem Lack 9a, der mit einem Pigment versetzt ist, welches nach dem Ablösen der Trägerfolie 1, d. h. dem Prägen der Folie auf das Substrat, eine rauhe Oberfläche gibt und eine für ein Beschreiben hinreichende Saugfähigkeit aufweist. Dieser Lack 9a ist jedoch nur in den Bereichen vorgesehen, in denen keine beugungsoptisch wirksame Musterung 7 vorhanden ist.

In den Bereichen der Signierschicht 8a dagegen, die über der beugungsoptisch wirksamen Musterung 7 liegen, ist ein transparenter bzw. klarer Lack (10a) vorhanden, der es einerseits gestattet, die beugungsoptisch wirksame Musterung 7 ohne weiteres von der Seite der Trägerfolie 1 bzw. der beschreibbaren Schicht 9a her zu sehen. Andererseits wird als Klarlack 10a üblicherweise ein Lack verwendet, der sich leicht von der Trägerfolie 1 löst, um dadurch die Verwendung eines besonderen Trennmittels zwischen der Schicht 8a und der Trägerfolie 1 überflüssig zu machen. Die Stärke der beschreibbaren Lackschicht 9a und der Klarlackschicht 10a ist in etwa gleich, um, wie bereits erwähnt, eine möglichst ebene Oberfläche 11 zu erreichen.

Die einzelnen Lackschichten haben folgende Zusammensetzung :

### Lack A (beschreibbarer Lack 9a)

| Komponente | Gew.-Teile |
|---|---|
| PVC/PVac Mischpolymerisat | 4 000 |
| Nitrocellulose | 2 000 |
| ölfreies Alkyd | 50 |
| Verlaufmittel | 800 |
| Dioctylphthalat | 500 |
| Methylethylketon | 25 000 |
| Toluol | 2 000 |
| Ethylacetat | 2 000 |
| Cyclohexanon | 1 000 |
| Diacetonalkohol | 1 000 |
| Titandioxid Rutil | 20 000 |
| Gleitmittel | 1 000 |

### Lack B (Klarlack 10a)

| Komponente | Gew.-Teile |
|---|---|
| Hochmolekulares PMMA-Harz | 2 000 |
| Polyethylen feindispers | 100 |
| Silikonalkyd ölfrei | 300 |
| nichtionisches Netzmittel | 50 |
| Nitrocellulose | 750 |
| Methylethylketon | 12 000 |
| Toluol | 2 000 |
| Diacetonalkohol | 2 500 |

### Lack C (Beugungsschicht 3a)

| Komponente | Gew-Teile |
|---|---|
| Methyl-/n-Buthylmethacrylat | 1 000 |
| niedrigviscose Nitrocellulose | 1 000 |
| phenol-modifiziertes Kolophoniumharz | 500 |
| Methylethylketon | 4 000 |
| Toluol | 3 000 |

| Ethylacetat | 1 500 |
|---|---|
| Butylacetat 98/100 | 3 000 |

### Lack D (Haftvermittlerschicht 5)

| Komponente | Gew-Teile |
|---|---|
| Hochmolekulares PMMA-Harz | 1 200 |
| Methylethylketon | 3 400 |
| Toluol | 1 000 |
| Mattierungsmittel | 100 |

### Lack E (Klebeschicht 12)

| Komponente | Gew-Teile |
|---|---|
| Nitrocellulose | 4 000 |
| Polyurethan, niedrigviskos | 1 000 |
| Methylethylketon | 25 000 |
| Toluol | 2 000 |
| Ethylacetat | 2 000 |

Zur Herstellung der Prägefolie gemäß Beispiel 1 (Fig. 1) wird wie folgt vorgegangen :

Auf die Trägerfolie 1, eine Polyethylenglykolterephthalat-Folie von 19 bis 23, vorzugsweise etwa 19 $\mu$m Dicke, werden in einem Zweiwalzendruckwerk mit einer hohen Passungsgenauigkeit mittels zweier Tiefdruckdekorwalzen genau ineinanderpassend die Lacke A und B gedruckt, und zwar mit einem Auftragsgewicht von 2,5 g/m² bezüglich des Lackes A und 4,8 g/m² bezüglich des Lackes B. Die Lacke werden bei etwa 120 °C getrocknet. Anschließend wird der Lack C mittels einer Linienraster-Tiefdruckwalze und mit einem Auftragsgewicht von etwa 2,2 g/m²aufgetragen und bei 120 °C getrocknet.

In die Lackschicht 3a wird dann bei etwa 130 °C mittels einer beispielsweise aus Nickel bestehenden Matrize die beugungsoptisch wirksame Musterung, im vorliegenden Fall ein Hologramm, eingeprägt. Das Einprägen geschieht abhängig von der Formel des für die Schicht 3a verwendeten Lackes zu einem unterschiedlichen Zeitpunkt. Anschließend an das Einprägen der Musterung 7 erhärtet die Lackschicht 3a durch Vernetzung oder in sonstiger Weise.

Zum Prägen der Musterung 7 wird die Matrize vorzugsweise elektrisch aufgeheizt. Vor dem Abheben der Matrize von der Lackschicht 3a nach der Prägung kann die Matrize wieder abgekühlt werden.

Sobald die Musterung 7 eingeprägt und die Lackschicht 3a hinreichend hart ist, wird die Lackschicht 3a bei etwa 10⁻⁴ Torr mit Aluminium in einer Schichtdicke von ca. 200 Å bedampft.

Auf die Metallschicht 4 wird anschließend die Haftvermittlerschicht 5 aus dem Lack D mit einem Auftragsgewicht von etwa 0,4 g/m² und schließlich die Klebeschicht 12 aus dem Lack E mit einem Auftragsgewicht von etwa 1,2 g/m² aufgebracht. Unter Umständen kann auf die Klebeschicht 12 verzichtet werden, sofern die Lackschicht 5 entsprechend zusammengesetzt ist.

### Beispiel 2 (Fig. 2)

Die Prägefolie gemäß Fig. 2 hat eine Übertragungslage 2b, die ebenso wie die Übertragungslage 2a des Ausführungsbeispiels 1 nach Fig. 1 eine beschreibbare Signierschicht 8b sowie eine Beugungsschicht 3b mit einer beugungsoptisch wirksamen Musterung 7' aufweist. Es bestehen jedoch zwei wesentliche Unterschiede zu der Folie gemäß Fig. 1, nämlich einerseits der, daß die Signierschicht 8b auch im Bereich der beugungsoptisch wirksamen Musterung 7' Bereiche eines saugfähigen, pigmentierten, beschreibbaren Lackes 9b aufweist, und andererseits der Unterschied, daß die Folie der Fig. 2 zusätzlich mit einer Magnetschicht 6 versehen ist.

Die Signierschicht 8b der Folie der Fig. 2 ist so gestaltet, daß trotz des Vorhandenseins von Bereichen 9b beschreibbaren Lackes über der beugungsoptisch wirksamen Musterung 7' dies von der Seite der Trägerfolie 1 her sichtbar ist.

Die Signierschicht 8b der Folie der Fig. 2 besteht entsprechend der Signierschicht 8a der Folie der Fig. 1 aus zwei verschiedenen Lacken 9b bzw. 10b, wobei der nicht-transparente, beschreibbare Lack 9b rasterartig, beispielsweise als Punktraster, Strichraster etc. aufgetragen ist. Der Lack 10b ist transparent oder durchscheinend und jeweils in den Zwischenräumen der mit dem Lack 9b bedeckten Bereichen vorgesehen. Wie die Figur zeigt, sind der beschreibbare Lack 9b und der die Zwischenräume ausfüllende Klarlack 10b in etwa in gleicher Schichtdicke vorgesehen, so daß sich zur Trägerfolie 1 hin eine ebene Oberfläche 11 ergibt.

Trotz des Vorhandenseins des nicht-transparenten, beschreibbaren Lackes 9b in der Schicht 8b auch in den Bereichen über der beugungsoptisch wirksamen Musterung 7' kann erreicht werden, daß diese Musterung 7', vor allem wenn es sich um ein Hologramm handelt, gelesen werden kann, wenn auch mit einem schlechteren Signal-Rauschabstand, da es bei Hologrammen möglich ist, in jedem Bereich die sämtlichen Informationen zu speichern.

Die bei dem Ausführungsbeispiel der Fig. 2 verwendeten Lacke sind folgende :

### Lack F (transparenter Lack 10b)

| Komponente | Gew-Teile |
|---|---|
| hochmolekulares PMMA-Harz | 2 000 |
| Silikonalkyd ölfrei | 300 |
| nichtionisches Netzmittel | 50 |
| niedrigviscose Nitrocellulose | 750 |
| Methylethylketon | 12 000 |
| Toluol | 2 000 |
| Diacetonalkohol | 2 500 |

### Lack G (beschreibbarer Lack 9b)

| Komponente | Gew-Teile |
|---|---|
| PVC/PVac-Mischpolymerisat | 4 000 |
| niedrigviscose Nitrocellulose | 2 000 |
| ölfreies Alkyd | 50 |
| Silikonpolyesterharz | 2 000 |
| Verlaufmittel | 800 |
| Dioctylphthalat | 500 |
| Methylethylketon | 25 000 |
| Toluol | 2 000 |
| Ethylacetat | 2 000 |
| Cyclohexanon | 1 000 |
| Diacetonalkohol | 1 000 |
| Calciumcarbonat | 25 000 |

### Lack H (Beugungsschicht 3b)

| Komponente | Gew-Teile |
|---|---|
| Methyl-/n-Butyl-Methacrylat | 1 000 |
| Niedrigviscose Nitrocellulose | 1 000 |
| phenol-modifiziertes Kolophonium-Harz | 500 |
| Methylethylketon | 4 000 |
| Toluol | 3 000 |
| Ethylacetat | 1 500 |
| Butylacetat 98/100 | 3 000 |

### Magnetschicht 6

Diese besteht aus einer Dispersion nadelförmigen $\gamma$-$Fe_2O_3$-Magnetpigments in einem Polyurethanbindemittel, verschiedenen Lackhilfsmitteln und einem Lösungsmittel aus Methylethylketon und Tetrahydrofuran. Derartige Magnetdispersionen sind an sich bekannt.

Die Herstellung der Prägefolie gemäß Beispiel 2 geschieht folgendermaßen :

In einer Zwei-Farben-Druckmaschine mit einer Passungsungenauigkeit von weniger als 0,05 mm werden mit zwei Tiefdruckdekorwalzen auf eine Polyethylenglykolterephthalat-Folie von 19 $\mu$m Dicke genau ineinanderpassend die Lacke F und G gedruckt, die zunächst nach den oben erwähnten Vorschriften, jedoch mit erniedrigtem Lösungsmittelgehalt hergestellt und nach Testdrucken soweit verdünnt werden, daß die Trockenschichtdicke der beiden Lacke gerade gleich groß wird und etwa 1,5 $\mu$m beträgt. Man erhält somit auf der Folie 1 eine durchgehende Signierschicht 8b von in etwa gleicher Dicke, die aus Bereichen 9b des beschreibbaren Lackes G und aus anderen Bereichen 10b des Lackes F besteht, wobei der Lack F gleichzeitig die Eigenschaft hat, sich gut von der Trägerfolie 1 zu lösen, während der Lack G an der Trägerfolie ggf. haftet, so daß beim Abziehen der Trägerfolie 1 der Lack G oberflächlich abreißt und sich eine rauhe Oberfläche ergibt.

Anschließend an das Bedrucken der Folie mit den Lacken F und G wird mit einer Linienraster-Tiefdruckwalze der Lack H in einem Flächengewicht von etwa 1,2 $g/m^2$ aufgetragen und bei 120 °C getrocknet.

In den Lack H wird dann, wie im Beispiel 1 beschrieben, die beugungsoptisch wirksame Musterung 7' eingeprägt und anschließend die Metallschicht 4 aufgedampft. Es könnte dann eine Haftvermittlerschicht des Lackes C gemäß Beispiel 1 in einer Stärke von etwa 0,4 $\mu$m aufgebracht werden. Bei dem Ausführungsbeispiel 2 ist diese Schicht jedoch weggelassen. Auf die Metallschicht folgt eine Schicht der Magnetdispersion oben beschriebener Zusammensetzung in einer Dicke von etwa 9 $\mu$m.

Die Magnetschicht muß nicht unbedingt die oben aufgeführte Zusammensetzung haben. Anstelle der

Fe$_2$O$_3$-Pigmente können z. B. auch andere Magnetpigmente, beispielsweise Co-dotierte magnetische Eisenoxide oder sonstige feindispergierte magnetische Materialien (Sr, Ba-Ferrite) verwendet werden. Die Bindemittelkombination der Magnetschicht kann unterschiedlich gewählt werden. Wie bereits erwähnt, kann bei entsprechender Bindemittelkombination auf die Haftvermittlerschicht der Ausführungsform gemäß Fig. 1 verzichtet werden, weil sich direkt eine gute Haftung zwischen der Magnetschicht 6 und dem Metall 4 ergibt. Ob eine Heißklebeschicht verwendet wird oder nicht, richtet sich nach der Zusammensetzung des Substrats auf das die Folie geprägt werden soll ; wenn das Substrat beispielsweise aus PVC besteht, wie dies bei Kreditkarten meist der Fall ist, kann üblicherweise auf eine besondere Heißklebeschicht verzichtet werden.

Versuche haben gezeigt, daß die Prägefolie gemäß Fig. 2 den Bestimmungen der gängigen Normen für Magnet-Datenträger entspricht. Insbesondere wurden jeweils hinreichende Signalspannungen und eine ausreichende Abriebfestigkeit erreicht.

Vorliegende Anmeldung ist eine von drei miteinander in Zusammenhang stehenden Anmeldungen, die gleichzeitig hinterlegt wurden, wobei der Gegenstand der jeweiligen Hauptansprüche jedoch unterschiedlich ist. Bei den beiden anderen Anmeldungen handelt es sich um die Anmeldungen Nr. 85 107 368.4 und 85 107 370.0 (EP-A-0 166 326 bzw. EP-A-0 171 540).

## Patentansprüche

1. Prägefolie, insbesondere Heissprägefolie, bestehend aus einer Trägerfolie (1) und einer von dieser ablösbaren Übertragungslage (2a, 2b), welche wenigstens eine nach dem Prägen und Ablösen der Trägerfolie (1) die Oberfläche bildende Signierschicht (8a, 8b) in Form einer beschreibbaren Lackschicht aufweist, welche Übertragungslage (2a, 2b) gegebenenfalls auf ihrer der Trägerfolie abgekehrten Seite eine zu ihrer Festlegung an einem Substrat dienende Klebeschicht umfasst, dadurch gekennzeichnet, dass die Übertragungslage (2a, 2b) auf der der Trägerfolie (1) abgekehrten Seite der Signierschicht (8a, 8b) mindestens eine eine beugungsoptisch, insbesondere holographisch wirksame Musterung (7, 7') aufnehmende Beugungsschicht (3a, 3b) umfasst, und dass die Signierschicht (8a, 8b) den beschreibbaren Lack nur in Bereichen (9a, 9b) aufweist, wobei die beschreibbaren Bereiche (9a) der Signierschicht (8a) und die beugungsoptisch wirksame Musterung (7) in gegeneinander abgegrenzten Flächenbereichen der Prägefolie vorgesehen sind.

2. Prägefolie, insbesondere Heissprägefolie, bestehend aus einer Trägerfolie (1) und einer von dieser ablösbaren Übertragungslage (2a, 2b), welche wenigstens eine nach dem Prägen und Ablösen der Trägerfolie (1) die Oberfläche bildende Signierschicht (8a, 8b) in Form einer beschreibbaren Lackschicht aufweist, welche Übertragungslage (2a, 2b) gegebenenfalls auf ihrer der Trägerfolie (1) abgekehrten Seite eine zu ihrer Festlegung an einem Substrat dienende Klebeschicht umfasst, dadurch gekennzeichnet, dass die Übertragungslage (2a, 2b) auf der der Trägerfolie (1) abgekehrten Seite der Signierschicht (8a, 8b) mindestens eine eine beugungsoptisch, insbesondere holographisch wirksame Musterung (7, 7') aufnehmende Beugungsschicht (3a, 3b) umfasst, und dass die Signierschicht (8a, 8b) den beschreibbaren Lack nur in Bereichen (9a, 9b) aufweist, wobei die beschreibbaren Bereiche (9b) der Signierschicht (8b) im Raster so vorgesehen sind, dass sie die beugungsoptische Musterung der Beugungsschicht (3b) rasterartig überdecken und die Musterung nur den Raster-Zwischenräumen entsprechend erkennbar ist.

3. Prägefolie nach einem der vorhergehenden Ansprüche, dadurch gekennzeichnet, dass die zwischen den beschreibbaren Bereichen (9a, 9b) befindlichen Bereiche (10a, 10b) der Signierschicht (8a, 8b) zur Bildung einer ebenen Oberfläche (11) aus Klarlack (10a, 10b) entsprechender Dicke bestehen.

4. Prägefolie nach Anspruch 3, dadurch gekennzeichnet, dass der Klarlack (10a, 10b) ein Ablöselack ist.

5. Prägefolie nach einem der vorhergehenden Ansprüche dadurch gekennzeichnet, dass die Beugungsschicht (3a, 3b) von einer Lackschicht gebildet ist, in die die beugungsoptisch wirksame Musterung (7, 7') eingeprägt ist.

6. Prägefolie nach Anspruch 5, dadurch gekennzeichnet, dass die Einprägung der beugungsoptisch wirksamen Musterung (7, 7') auf der von der Signierschicht (8a, 8b) weg weisenden Seite der Beugungsschicht (3a, 3b) vorgenommen ist.

7. Prägefolie nach einem der vorhergehenden Ansprüche, dadurch gekennzeichnet, dass die Übertragungslage (2b) auf der der Trägerfolie (1) abgekehrten Seite der Beugungsschicht (3b) eine Magnetschicht (6) aus einer Dispersion magnetisierbarer Teilchen in einem Bindemittel umfasst.

8. Prägefolie nach einem der vorhergehenden Ansprüche, dadurch gekennzeichnet, dass die Signierschicht (8a, 8b) und/oder die Beugungsschicht (3a, 3b) und/oder die Magnetschicht (6) und/oder die Klarlackbereiche (10a, 10b) gefärbt sind.

## Claims

1. A stamping or blocking foil, in particular a hot stamping foil consisting of a carrier foil (1) and a transfer layer (2a, 2b) detachable therefrom, which has at least one signing layer (8a, 8b) in the form of an

EP 0 170 832 B1

inscribable lacquer layer forming the surface after the carrier foil (1) has been blocked and detached, which transfer layer (2a, 2b) has, if required, on its opposite side to the carrier foil, an adhesive layer serving to fix it on a substrate characterized in that the transfer layer (2a, 2b) comprises on the side of the signing layer (8a, 8b) facing away from the carrier foil (1), at least one diffraction layer (3a, 3b) accommodating at least one diffractionally, especially holographically, effective pattern (7, 7') and that the signing layer (8a, 8b) only has the inscribable lacquer in the zones (9a, 9b), the inscribable zones (9a) of the signing layer (8a) and the diffractionally effective pattern (7) being provided in areal zones of the stamping or blocking foil delimited with respect to each other.

2. A stamping or blocking foil, in particular a hot stamping foil, consisting of a carrier foil (1) and a transfer layer (2a, 2b) detachable therefrom, which has at least one signing layer (8a, 8b) in the form of an inscribable lacquer layer forming the surface after the carrier foil (1) has been blocked and detached, which transfer layer (2a, 2b) has, if required, on its opposite side to the carrier foil (1) an adhesive layer serving to fix it on a substrate characterized in that the transfer layer (2a, 2b) comprises on the side of the signing layer (8a, 8b) facing away from the carrier foil (1) at least one diffraction layer (3a, 3b) accommodating at least one diffractionally, especially holographically effective pattern (7, 7') and that the signing layer (8a, 8b) only has the inscribable lacquer in the zones (9a, 9b), the inscribable zones (9b) of the signing layer (8b) being provided in the grid in such a way that they cover the diffraction pattern of the diffraction layer (3b) in the manner of a grid and that the pattern is only recognisable in correspondence with the gaps of the grid.

3. A stamping or blocking foil according to one of the preceding claims, characterized in that the zones (10a, 10b) of the signing layer (8a, 8b) located between the inscribable zones (9a, 9b) consist of a clear lacquer (10a, 10b) of a suitable thickness to form a flat surface (11).

4. A stamping or blocking foil according to claim 3, characterized in that the clear lacquer (10a, 10b) is a detachable lacquer.

5. A stamping or blocking foil according to one of the preceding claims, characterized in that the diffraction layer (3a, 3b) is formed by a lacquer layer into which the diffractionally effective pattern (7, 7') is blocked in.

6. A stamping or blocking foil according to claim 5, characterized in that the blocking in of the diffractionally effective pattern (7, 7') is effected on the side of the diffraction layer (3a, 3b) facing away from the signing layer (8a, 8b).

7. A stamping or blocking foil according to one of the preceding claims, characterized in that the transfer layer (2b) comprises, on the side of the diffraction layer (3b) facing away from the carrier foil (1), a magnetic layer (6) of a dispersion of magnetisable particles in a binding agent.

8. A stamping or blocking foil according to one of the preceding claims, characterized in that the signing layer (8a, 8b) and/or the diffraction layer (3a, 3b) and/or the magnetic layer (6) and/or the clear lacquer zones (10a, 10b) are coloured.

**Revendications**

1. Feuille à marquer, en particulier feuille à marquer à chaud, constituée d'un support pelliculaire (1) et d'une couche de transfert (2a, 2b), pouvant être séparée de cette dernière et qui présente au moins une couche de marquage (8a, 8b), sous forme d'une couche de vernis sur laquelle on peut écrire, formant la surface après empreinte et séparation du support pelliculaire (1), laquelle couche de transfert (2a, 2b) comprend éventuellement, sur sa face opposée au support pelliculaire, une couche adhésive servant à sa fixation sur un substrat, caractérisée en ce que la couche de transfert (2a, 2b) comprend, sur la face de la couche de marquage (8a, 8b) opposée au support pelliculaire (1), au moins une couche de diffraction (3a, 3b), recevant un dessin (7, 7') à effet de diffraction, en particulier à effet holographique, et que la couche de marquage (8a, 8b) ne comporte le vernis sur lequel on peut écrire que dans des zones (9a, 9b), les zones (9a) de la couche de marquage (8a) sur lesquelles on peut écrire et le dessin (7) à effet de diffraction étant prévus dans des zones superficielles de la feuille de marquage délimitées les unes par rapport aux autres.

2. Feuille à marquer, en particulier feuille à marquer a chaud, constituée d'un support pelliculaire (1) et d'une couche de transfert (2a, 2b), pouvant être séparée de cette dernière et qui présente au moins une couche de marquage (8a, 8b), sous forme d'une couche de vernis sur laquelle on peut écrire, formant la surface après empreinte et séparation du support pelliculaire (1), laquelle couche de transfert (2a, 2b) comprend éventuellement, sur sa face opposée au support pelliculaire, une couche adhésive servant à sa fixation sur un substrat, caractérisée en ce que la couche de transfert (2a, 2b) comprend, sur la face de la couche de marquage (8a, 8b) opposée au support pelliculaire (1), au moins une couche de diffraction (3a, 3b), recevant un dessin (7, 7') effet de diffraction, en particulier à effet holographique, et que la couche de marquage (8a, 8b) ne comporte le vernis sur lequel on peut écrire que dans des zones (9a, 9b) les zones (9b) de la couche de marquage (8b) sur lesquelles on peut écrire étant, dans le quadrillage, prévues de façon qu'elles recouvrent le dessin de diffraction de la couche de diffraction (3b) selon un quadrillage, et que le dessin ne puisse être reconnu que selon les espaces intermédiaires du quadrillage.

3. Feuille à marquer selon l'une des revendications précédentes, caractérisée en ce que les zones (10a, 10b) de la couche de marquage (8a, 8b) se trouvant entre les zones (9a, 9b) sur lesquelles on peut écrire sont, pour la formation d'une surface plane (11), constituées d'un vernis transparent (10a, 10b) d'épaisseur correspondante.

4. Feuille à marquer selon la revendication 3, caractérisée en ce que le vernis transparent (10a, 10b) est un vernis séparable.

5. Feuille à marquer selon l'une des revendications précédentes, caractérisée en ce que la couche de diffraction (3a, 3b) est formée d'une couche de vernis dans laquelle est incrusté le dessin (7, 7') à effet de diffraction.

6. Feuille à marquer selon la revendication 5, caractérisée en ce que l'incrustation du dessin (7, 7') à effet de diffraction est mise en oeuvre sur la face de la couche de diffraction (3a, 3b) opposée à la couche de marquage (8a, 8b).

7. Feuille à marquer selon l'une des revendications précédentes, caractérisée en ce que la couche de transfert (2b) comprend, sur la face de la couche de diffraction (3b) opposée au support pelliculaire (1), une couche magnétique (6) constituée d'une dispersion de particules magnétisables dans un liant.

8. Feuille à marquer selon l'une des revendications précédentes, caractérisée en ce que la couche de marquage (8a, 8b) et/ou la couche de diffraction (3a, 3b) et/ou la couche magnétique (6) et/ou les zones de vernis transparent (10a, 10b), sont colorées.

FIG. 1

FIG. 2